(19) Europäisches Patentamt
European Patent Office
Office européen des brevets

(11) Publication number: 0 040 048
A1

(12) EUROPEAN PATENT APPLICATION

(21) Application number: 81302015.3

(22) Date of filing: 07.05.81

(51) Int. Cl.$^3$: D 01 F 9/04
C 08 B 37/04, A 23 L 1/04

(30) Priority: 08.05.80 US 147763

(43) Date of publication of application:
18.11.81 Bulletin 81/46

(84) Designated Contracting States:
AT BE CH DE FR GB IT LI LU NL SE

(71) Applicant: MERCK & CO. INC.
126, East Lincoln Avenue P.O. Box 2000
Rahway, New Jersey 07065(US)

(72) Inventor: King, Alan H.
459 Grove Street
Westfield New Jersey 07090(US)

(72) Inventor: Joh, Yongkeun
106 Judy Drive
Keasbey New Jersey 08832(US)

(72) Inventor: Daniel, William J.
1711 Essex Avenue
Linden New Jersey 07036(US)

(74) Representative: Crampton, Keith John Allen et al,
D. Young & Co. 10 Staple Inn
London WC1V 7RD(GB)

(54) **Calcium alginate fibers.**

(57) Insoluble calcium alginate fibers are produced by reacting, under high shear at ambient temperature, algin in a first aqueous solution with bivalent or tervalent metal cations in a second aqueous solution containing the cations in excess of the stoichiometric amount necessary to precipitate the algin. The metal is preferably calcium. The resulting fibers are stable to heat, shear and acid and they resemble natural food fibers in texture and can provide texture to many processed food products.

EP 0 040 048 A1

Croydon Printing Company Ltd.

# CALCIUM ALGINATE FIBERS

The preparation of synthetic pulp by the reaction between a water-soluble gum such as sodium alginate and calcium ions is known (see, e.g., U.S. Patent 3,446,625). Industrial Gums, 2nd ed., R. L. Whistler, ed., Academic Press (1973), pp 56 and 57 also describes the calcium-algin reaction.

Various types of alginate fibers have been produced by spinning or extruding alginate solutions including ingredients such as salts or proteins into a precipitating bath containing calcium or other multivalent cations. These alginate fibers have been utilized *inter alia* for textured protein products, surgical gauze, adhesive strips for therapeutic treatment, sanitary napkins/tampons and dye-containing fiber for textiles.

Alginate fibers in accordance with the present invention, which are insoluble are produced by reacting, under high shear at ambient temperature, algin in a first aqueous solution with bivalent or tervalent metal cations in a second aqueous solution containing the cations in excess of the stoichiometric amount necessary to precipitate the algin. The metal is preferably calcium. Various texture-modifying ingredients, colors, and flavors can be trapped in the alginate fibers to resemble the fibrous textures of different food products. These fibers are extremely stable to heat, shear, salt, alcohol and acid and thus are useful in a wide variety of processed foods such as sauces, toppings, fillings, juice products and meat/shellfish analogues. These fibers are particularly useful as simulated or extended pulps or puree for commercially processed fruit and vegetable products.

The algins useful in this invention are the water-soluble salts of alginic acid. Algin is found in all species of Phaeophyceae. The preferred forms are sodium, potassium, and ammonium alginates and the ester, propylene glycol alginate. The algins are commercially available, e.g. those sold under the trade marks KELGIN, KELMAR, KELCOGEL and KELCOLOID, from Kelco Division of Merck & Co. Inc., San Diego, California. In general, low viscosity algins are preferred. When a propylene glycol alginate is used, it is preferred to use one of less than 50% esterification.

The calcium ions can be provided by various means; however, a readily water-soluble salt, preferably $CaCl_2$, in aqueous solution is most desirable. It will be recognized that other bivalent and tervalent metal ions could be used in the practice of this invention but when the end product is to be used for human or animal consumption, calcium ions are preferred.

The controlled high shear required during the algin-calcium precipitation can also be supplied by various means but must be comparable with the shear produced by e.g. a mixer sold under the trade mark "WARING" or "LIGHTNIN". The exact shear conditions required for precipitation will depend on the relative amounts of calcium and algin used, the texture-modifying ingredients included, and the properties desired in the end product as will be described below.

Generally, the fibers of this invention can be described as plain alginate fibers, modified alginate fibers and esterified alginate fibers. These three types of fibers vary in properties one from the other but share the common properties of improved stability to heat, shear, acid, salt, and alcohol. They are also not water-soluble.

Algins are long linear copolymers of D-mannuronic and L-guluronic acid (molecular weights from 4,000 to 180,000) and have the property of instantaneously reacting with calcium ions by crosslinking two carboxyl groups. The viscosity of an algin and calcium mixture will increase to a point where gelation occurs as the calcium ions concentration increases. Gelation normally hinders further cross-linking.

Controlled high-shear mixing of calcium ions and algin overcomes the problem of gelation and permits of stoichiometric crosslinking. The loosely structured three-dimensional network characteristic of algin-calcium gel is thus avoided and instead a fibrous algin precipitate is formed. It is believed that a considerable number of stoichiometrically cross-linked alginate molecules stack tightly together and achieve a more crystalline state, thus yielding the more stable products of this invention. The texture of the alginate fibers of this invention resembles the texture of the cellulosic fibers of fruits and vegetables and other natural food fibers.

The alginate fibers of this invention are extremely stable under various conditions: wide range of pH, high heat, alcohols (e.g., ethanol), high salt (e.g., NaCl), and high shear pumping. For example, alginate fibers (plain and modified) can withstand being added to solutions of pH 0.35 to 12.5 and then being retorted at 127°C for 60 min. However, the ingredients trapped in the modified alginate fiber can break down under extreme conditions, so that the stability of modified fiber products is a function of the modifiers used.

Varying the shear mixing conditions during cross-linking modifies the size of the alginate precipitate. A smooth blade such as on a Lightnin mixer under medium to high speed (1,000 to 4,000 rpm) produces fiber lengths approximately between 0.5-10.0 mm; whereas a sharp blade such as on a waring blender under high speed (>15,000 rpm) produces very fine fibers less than about 0.05mm in length. Another important factor affecting fiber length is the rate at which the calcium solution is added to an algin solution under given shear conditions. In general, slow addition of the calcium solution is required to produce very fine alginate fibers and faster addition is necessary for longer fiber length. Algin and calcium solutions should be at about room temperature to produce instantaneous crosslinking. When higher temperature solutions are used, thermal agitation delays or prevents instantaneous cross-linking.

The pH of the algin solution before adding calcium ions should be above 4.2 to prevent the formation of an acid-alginate gel, since the carboxylate anions of the alginate also react with hydrogen ions and will not permit instantaneous calcium ion crosslinking.

A sequestrant such as sodium hexametaphosphate can be added to the water before hydrating the algin in order to prevent pre-reaction of the algin with polyvalent ions in the water. When an algin with considerable calcium residue or very hard water is used, it is necessary to add a sequestrant to the water before hydrating the algin to produce a desirable precipitate. An excess amount of sequestrant will also inhibit the algin-calcium crosslinking. Sequestrants, if necessary, are used up to about 0.50%, depending on the alginate used and on the water hardness.

Plain alginate fiber is preferably made by slowly adding a 1.0-1.5% low viscosity algin solution to a relatively large volume of a calcium chloride (3-5%) solution in a Waring blender at high speed (>15,000 rpm). Use of a large volume of calcium solution relative to the amount of algin added permits high shear mixing as the viscosity of the solution is kept low. Plain alginate fiber is then separated from the calcium solution as by filtration and rinsed with water to remove excess calcium ions. The remaining calcium solution can be reused for continuous precipitation by adjusting the calcium ion concentration (e.g., addition of more $CaCl_2$). Plain alginate fiber is approximately 0.05-1.5mm long, white/clear, and has a chewy-fibrous texture, similar to cellulosic fiber. Approximately 1 gram of dry algins (low or high mol. wt.) produces 20-30g of plain alginate fiber (drained weight, containing about 20-25% $H_2O$). These fibers are useful as additives in foods.

Modified alginate fiber is preferably made by adding a predetermined amount of calcium ion to an algin solution which has been blended with any one or a combination of various texture modifiers of large molecular size which are chemically compatible with the algin. The added ingredients can be: natural fruit or vegetable solids, carbohydrates (starches, dextrin, sucrose, dextrose, invert sugar, etc.), water soluble gums (acacia, carboxymethyl cellulose, carrageenan, guar, karaya, locust bean, pectin, tragacanth, or xanthan), proteins (casein, gelatin, soy bean, egg albumin), polyhydric alcohols (glycerol, sorbitol, mannitol), artificial colors and flavors, fats, and oils. The added ingredients become trapped in the three dimensional network of the alginate fiber and produce different textures, simulating different fibrous food products. It should be noted that this preferred procedure differs from that followed for preparation of the plain alginate fiber in that a specific amount of calcium ions is added to an algin solution. The use of texture modifiers diminishes the amount of shear required to produce a fibrous precipitate, thus the inherent viscosity of the algin solution is not detrimental in this process. Further, since the product of this process is usually an integral part of an end product, (e.g., a tomato puree), excess calcium ions cannot be washed off as with plain alginate fibers.

Whereas the tightly crosslinked plain alginate fibers squeeze water and other small molecules out during precipitation, larger molecular weight ingredients such as the water soluble gums, carbohydrates, protein, oils, etc. remain trapped more completely. The alginate fibers modified by such ingredients are often softer or less chewy because the trapped ingredients act like plasticizers, and may alter formation of the crystalline-like structure of the plain alginate precipitate. The modified alginate fibers can be varied depending on the end use; for example, to stimulate meat/shellfish type textures, oil/water emulsions can be trapped in the alginate fiber by precipitating an emulsion made of oil, protein, starch, flavor, color, and an algin solution.

The weight of modified alginate fibers produced will depend on the amount and type of solids entrapped. Approximately 1 gram of dry algin (low or high mol. wt.) produces 90-120 grams (drained weight, containing about 20-25% $H_2O$) of modified alginate fiber. The ratio between the dry algin and calcium ions is approximately 1:0.3 - 0.4 or about 4-6 times more calcium ions than stoichiometrically required for complete substitution, which requires 7.2% calcium based on the weight of algin. But the optimum calcium ion concentration will vary, depending on the added ingredients and shear conditions. Generally, the higher the amount of shearing during precipitation, the lower the amount of calcium required. Also, the greater the amount of texture modifying ingredients included in the algin solution, especially those of large mol. wt., the lesser calcium and shearing are required to precipitate a given amount of alginate.

Esterified-alginate fibers (hereinafter referred to as propylene glycol or PGA fibers) are softer and usually precipitate out shorter than other alginate fibers. Moderately substituted P.G. alginates (not more than 50% esterified, e.g. KELCOLOID® HVF) are preferable to produce satisfactory precipitation of fiber. As with the modified alginate fiber, other ingredients can be added to the P.G. alginate solution before precipitating with calcium ions. PGA fibers also possess quite good foaming characteristics. The finely severed PGA fiber is suitable as a clouding agent as well as a secondary foaming agent. The clouding agents/foaming agents made from P.G. alginate suspend well (no settling).

Both plain and modified alginate fibers provide fiber and improve the texture of many food products. The alginate fibers can be used in their wet form or after dehydration. For example, tomato pulp type modified alginate fiber can be made as a large batch at once and used as texturized tomato solids added to different products containing tomato solids, or the texturized tomato solids can be made at the beginning of an in-line process utilizing the available water in the formula.

The alginate fibers provide more desirable, fibrous texture similar to natural products or compensate for the loss of texture during processing, especially under severe contitions such as retorting, low pH, salt, shear, etc. Furthermore, the alginate fibers often reduce the cost of many food products while improving texture. The cost reduction may be up to 50% depending on the products involved.

Utilization of the fibers' ability to trap oils, essential oils, flavors, colors, etc. leads to many possible applications requiring specific functionalities. Encapsulation of these materials in the fibers works to delay release of flavors, colors, or active ingredients, to control the low specific gravity of essential oils and flavors in liquid products, and to reduce the oxidative degration of flavors, colors, oils, etc.

Some applications of plain alginate fibers and modified alginate fiber are:

... Improving fibrous or pulpy texture as well as cost reduction in products, such as pizza sauce, spaghetti sauce, tomato sauce, imitation catsup, barbecue sauce, steak sauce, meat sauce, pourable dressing (tomato based), imitation/low calorie preserve and jelly, yogurt filling, pastry filling, other bakery/confectionary fillings and toppings, duck sauce, apricot/fruit glaze, etc.

... Providing more chewability and connective tissue-like bite as well as cost reduction in extruded meat/shellfish analogues, soy protein or extended meat products such as hamburger, meat balls, bacon, bacon bits, breakfast sausages and patties, hors d'oeurves, crabmeat and other shellfish spreads, chicken spread and pet foods.

... Pulping and clouding agents as well as color and flavor carriers for juice drinks, nectars, prepared cocktails, cocktail mixes, and beverage/bakery flavor concentrates or emulsions.

...Replacement of bran fiber as a dietary fiber for breakfast cereals, and other high fiber products where the flavor or color of bran is not desirable.

PGA fiber of very fine particle size is ideal as a clouding/forming agent as well as a flavor/color carrier for juice drinks, nectars, cocktail mixes (pina colada, etc.), and beverage/bakery concentrates and emulsions.

Both modified alginate fiber and PGA fiber can be used for encapsulating flavors, essential oils, active ingredients, etc., for chewing gums, candies, chewable tablets, and other pharmaceutical products. Encapsulation by these fibers may also reduce oxidative discoloration of natural colors and degradation of flavors.

The invention is further defined by reference to the following examples, which are intended to be illustrative and not limiting.

## EXAMPLE 1

### SIMULATED/EXTENDED FRUITBASE (PASTE)

| INGREDIENT | GRAMS |
|---|---|
| Water | 200.0 |
| Sugar | 150.0 |
| Calcium Chloride, anhyd., (5% soln). | 12.0 |
| Instant Clearjel Starch® | 6.0 |
| KELGIN LV® | 3.0 |
| Sod. Hexametaphosphate | 0.36 |

Sugar (and/or Dextrin, DE 10 or 24) can vary from about 50-150 grams to taste.
Optional ingredients include fruit juice or solids (approx. 5 gm), sod. citrate dihydrate (approx. 0.45 gm) $TiO_2$ (approx. 0.10 gm), flavorings, and color.
Sodium citrate may be required when fruit juices or solids are used; levels need to be adjusted, depending on the acidity of the fruit juices and solids.

PROCEDURE

1) Add sod. hexametaphosphate and sod. citrate to water.

2) Thoroughly blend remaining dry ingredients with 50 grams of sugar, and slowly add (sift in) to well-agitated water. Mix for 10-15 min. (with a Lightnin-type, propeller mixer).

3) Add friut juice or solids and remaining sugar (pH should be higher than 4.3 after adding juice or solids. Adjust with additional sodium citrate if necessary).

4) Add all of the calcium chloride solution as a continuous stream, under medium/high speed agitation. Mix just until uniform.

5) 3-5 min. after precipitation, adjust pH and acidity, if desired, with appropriate acids.

EXAMPLE 2

SIMULATED/EXTENDED TOMATO PULP

| INGREDIENT | GRAM | PERCENT |
|---|---|---|
| Water | 194.50 | 77.28 |
| Tomato paste(26%TS) | 32.00 | 12.71* |
| $CaCl_2$, anhyd.(5% soln.) | 12.00 | 4.77 |
| FroDex 24® | 10.00 | 3.97 |
| Instant Clearjel® (or KELTROL®) | 1.50(or 0.3) | 0.60 (or 0.12) |
| KELGIN LV® | 1.50 | 0.60 |
| Sod. Hexametaphosphate | 0.18 | 0.07 |
| Flavor (to suit) | | |
| Color (to suit) | | |

*Total tomato solids approx. 3.3%. Tomato solids are not essential. When no tomato solids are used, increase Instant Clearjel to 2.5-3.0 g.

PROCEDURE

1. Add Sod. Hexametaphosphate to water
2. Thoroughly dry blend remaining ingredients and slowly add (sift in) to well-agitated water. Mix for 10-15 min. (Lightnin-type mixer).
3. Add tomato paste, and mix for ca. 2 minutes.
4. Add all of $CaCl_2$ solution as a continuous stream under medium high shear agitation using Lightnin-type mixer.
5. Mix just until uniform.
6. 3-5 min. after precipitation, adjust pH and acidity, as desired, with appropriate acids.

Where a heavier, more apple-sauce-like consistency is desired, water levels of about 100 gm can be used.

## EXAMPLE 3

## SIMULATED CRABMEAT BASE

| INGREDIENT | GRAM | PERCENT |
|---|---|---|
| Water | 100.0 | 84.59 |
| $CaCl_2$, anhyd. (5% soln.) | 12.0 | 5.08 |
| Vegetable Oil | 10.0 | 4.23 |
| Dextrin (DE 10) | 5.0 | 2.12 |
| Instant Clearjel Starch® | 4.0 | 1.69 |
| KELGIN MV® | 3.0 | 1.27 |
| Soy Protein Isolate | 2.0 | 0.85 |
| Sod. Hexametaphosphate | 0.35 | 0.15 |
| Titanium Dioxide (optional) | (0.05) | (0.02) |
| Flavor (to suit) | | |
| Color (to suit) | | |
| | 236.40 | 100.00 |

PROCEDURE

1. Add sodium hexametaphosphate to water.
2. Thoroughly blend remaining dry ingredients and slowly add (sift in) to well-agitated water. Mix for 10-15 min. (with a Lightnin-type prop. mixer).
3. Add vegetable oil (after mixing with flavors and colors.
4. Add all of the calcium chloride solution at once under medium/high speed agitation. Mix just enough until uniform.

EXAMPLE 4

CLOUDING/FOAMING AGENT WITH PGA FIBER

| INGREDIENT | GRAMS | PERCENT |
|---|---|---|
| Water | 150-(200) | 77.473 |
| FroDex 10 or 24 | 20-( 40) | 10.330 |
| $CaCl_2$, anhyd., (5% soln.) | 12 | 6.200 |
| Orange Juice Conc. | 10-( 20) | 5.170 |
| KELCOLOID HVF® | 1.0 | 0.517 |
| Sod. Citrate dihydrate | 0.3 | 0.155 |
| KELTROL® (or Instant Clearjel Starch®) | 0.3(or 1.5) | 0.155 (or 0.77) |
| Flavor (to suit) | | |
| Color (to suit) | | |

Sod. citrate dihydrate levels may need to be adjusted, depending on the acidity of the fruit juice. Other juices may be substituted for orange juice (or concentrate) or the juices may be eliminated.

PROCEDURE

1. Add sod. citrate dihydrate to water.
2. Thoroughly blend dry ingredients and slowly add (sift in) to well agitated water. Mix for 10-15 min. (with a Lightnin-type mixer).
3. Add friut juice conc. (pH should be higher than 4.3 after adding the friut juice conc).
4. Add $CaCl_2$ soln. very slowly as a continuous stream at high speed in a Waring Blender mixer.

EXAMPLE 5

SIMULATED FRUIT PULP OR CLOUD WITH ALGIN FIBER (ORANGE)

| INGREDIENT | GRAMS | PERCENT |
|---|---|---|
| Water | 200 | 80.198 |
| Sugar or Dextrin (DE 10 or 24) | 20 -(100) | 8.020 |
| $CaCl_2$, anhy. (5% soln.) | 12 | 4.810 |
| Fruit Juice concentrate* | 15 -( 30) | 6.020 |
| KELGIN LV® | 1.5 | 0.600 |
| KELTROL® (or Instant Clearjel Starch®) | 0.4(or 3.0) | 0.160 (or 1.19) |
| Sodium Citrate dihydrate | 0.3 | 0.120 |
| Flavor (to suit) | | |
| Color (to suit) | | |

*Fruit Juice concentrate: any fruit juice (generally three-fold).

KELCOGEL LV (1.2 g) can be used to replace both KELGIN LV (1.5 g) and sodium hexametaphosphate (0.18 g). Sodium citrate dihydrate levels may need to be adjusted, depending on the acidity of various fruit juices.

PROCEDURE

1. Add sodium hexametaphosphate and sodium citrate dihydrate to water.
2. Thoroughly blend remaining dry ingredients and slowly add (sift in) to well-agitated water. Mix for 10-15 minutes (with a Lightnin-type, propeller mixer).
3. Add fruit juice concentrate (pH should be higher than 4.3 after adding the juice concentrate - adjust if necessary).
4. Add all of the $CaCl_2$ solution as a continuous stream, under medium/high speed agitation. (Note: For production of clouds, use a Waring blender mixer).
5. Adjust pH and acidity, if needed, with appropriate acids.

CLAIMS

1. An alginate fiber produced by reacting, under high shear at ambient temperature, algin in a first aqueous solution with bivalent or tervalent metal cations in a second aqueous solution containing the cations in excess of the stoichiometric amount necessary to precipitate the algin.

2. A fiber as claimed in Claim 1, in which the algin is sodium alginate, potassium alginate, ammonium alginate, or an esterified alginate.

3. A fiber as claimed in Claim 2, in which the algin is sodium alginate or propylene glycol alginate of less than 50% esterification and the metal is calcium.

4. A fiber as claimed in Claim 3, in which the calcium cation concentration is four to six times greater than the stoichiometrically required amount.

5. A fiber as claimed in any one of Claims 1 to 4, in which the second aqueous solution is under high shear and the first aqueous solution is added to it.

6. A fiber as claimed in any one of Claims 1 to 5, in which the algin is reacted with the metal cations in the presence of high-molecular-weight fiber modifiers.

7. A fiber as claimed in Claim 6, in which the modifiers are fruit or vegetable solids, carbohydrates, water-soluble gums, proteins, artificial colors or flavors, fats, or oils.

8. A fiber as claimed in Claim 2 or 6, in which the algin is propylene glycol alginate.

European Patent Office

# EUROPEAN SEARCH REPORT

0040048

Application number
EP 81 30 2015

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| D | US - A - 3 446 625 (J. BLETHEN)<br>* Column 7, lines 47-52, 67-70; column 12 example 10 * | 1-8 | D 01 F 9/04<br>C 08 B 37/04<br>A 23 L 1/04 |
| | -- | | |
| | GB - A - 1 370 888 (ROTHMANS)<br>* Page 3, lines 35-44 * | 1 | |
| | -- | | |
| | US - A - 2 988 782 (E. PARRISH et al.)<br>* Claim 1 * | 1 | TECHNICAL FIELDS SEARCHED (Int. Cl.3) |
| | -- | | |
| | FR - A - 2 157 259 (RHODIACETA)<br>* Claims * | 1 | D 01 F 9/04<br>D 01 D 5/40<br>C 08 B 37/04<br>C 08 L 5/04<br>A 23 L 1/04 |
| | ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 14-08-1981 | VAN GOETHEM |

EPO Form 1503.1 06.78